# EUROPEAN PATENT SPECIFICATION

(11) **EP 2 045 302 B1**
(45) Date of publication and mention of the grant of the patent: **13.10.2010**
(21) Application number: 08165534.2
(22) Date of filing: 30.09.2008
(51) Int. Cl.: C09D 133/12, C08L 33/12, C09D 7/00, C11D 1/14, C11D 3/10, C11D 3/37, C11D 7/12, C08K 3/26, C09D 133/08, C08L 33/08

(54) **Shade coating composition based on a removable coating comprising a binder system, and a cleaning agent for removal thereof**
Abdeckschicht auf Basis einer Bindemittel enthaltenden, entfernbaren Beschichtung, und ein Reinigungsmittel zur Entfernung
Composition de revêtement d'apparence à base de revêtement amovible comprenant un système liant, et d'un agent de nettoyage pour l'enlever

(30) Priority: 01.10.2007 GB 0719118
(43) Date of publication of application: 08.04.2009
(73) Proprietor: Fenzi Belgium nv, 1800 Vilvoorde (BE)
(72) Inventor: DELPLANQUE, Pascal, B-1800, Vilvoorde (BE)
(74) Representative: Bird, William Edward

(56) References cited:
- WO-A-03/016413
- DE-A1- 19 812 317

## Description

### Field of the invention

The present invention relates to a coating formulation and to a removable coating obtainable therefrom, and particularly a removable protective coating for ultraviolet-light transparent parts of structures or buildings such as greenhouses, thus providing a shading effect moderating the intensity of sun irradiation inside the building, e.g. greenhouse. The present invention also relates to an improved cleaning agent for the removal of such a coating, e.g. at the end of the sunny season or when the protective effect of the coating becomes insufficient due to heavy rain or other atmospherically difficult conditions. The present invention further relates to a method for moderating the intensity of sun irradiation inside a building or structure such as a greenhouse by applying such a protective coating onto an external (or an internal) surface thereof.

### Background of the invention

In modern agriculture and particularly in horticulture, a lot of crops are cultivated inside greenhouses in order to control and optimise the conditions, such as temperature, illumination, moisture and pollination conditions, in which the plants are grown. Glass is a common choice for a greenhouse covering because of its permanence and durability. Plastics have also achieved a good position in agriculture and horticulture, especially many kinds of organic glass such as acrylic can be used for covering a greenhouse. It is also known to replace glass in greenhouses by polyethylene. Polyethylene for greenhouse films has to be as stable as possible to the environment and in spite of the development of synergistic light stabilisers the maximum lifetime that can be currently achieved even in the less sunny climates is about three years. After this time slits appear in the films from stress points, particularly where the films are in contact with the greenhouse structure and the material has to be replaced. In spite of this, it is increasingly more economical to use polyethylene than glass due to the lower cost and shatter resistance of the former.

However a common problem is encountered as during the sunny season the plants grown inside a greenhouse, whether made of glass or polyethylene, can be exposed to a large, or even too large, amount of radiation, which can lead to perturbation, or even deterioration of their living and growing conditions, and which often results in diminution of the production. Such a problem is usually addressed by applying a protective coating on the greenhouses. Such a coating comprising a pigment that will moderate the amount of radiation that will pass into the greenhouse, and is usually used with a binder that will make the pigment stick to the surface of the greenhouses.

Typically, the coating is applied on the surface of the greenhouse at the beginning of the sunny season, to protect the plant inside the greenhouse from an excess of radiation, and is removed at the end of the season, when it is neither needed nor desired anymore.

Chalk dispersed in starch has been used for a long time, but presents a very poor resistance to the atmospheric conditions, particularly rain, and therefore need to be replaced several times per season.

More recently, polymeric binders have been used for the preparation of such coatings. Different techniques have been developed in order to improve the processability, resistance to UV radiation, or the ease of removal of the coating at the end of the season.

European Patent No. EP-0,999,736-B1, describes a protective coating comprising a pigment and a binder being a polymer, e.g. a vinyl polymer, having a weight-average molecular weight of 10,000-100,000 and an acid value of 40-250. Such a coating can be removed, e.g. at the end of the sunny season, with a removing agent comprising a strong base and a complex former. However the coatings described in EP-0,999,736-B1 present several drawbacks, as they usually require the use of a silane adhesion promoter, and their removing agent comprises a strong base such as sodium hydroxide and a complex former such, as for example, the tetrasodium salt of ethylene diamine tetraacetic acid or the trisodium salt of nitrilo-triacetic acid. These components of the removing agent are well known to bring environmental concerns. Additionally, the strong base is highly corrosive and therefore brings human health risks during the removal step which is usually performed manually. Moreover it has been observed that the protecting coating of EP-0.999,736-B1, when applied under certain conditions, does not suitably withstand hard atmospheric conditions, particularly rain, during the whole annual season.
WO 03/016413 relates to coating materials that can be cured thermally and by actinic radiation and to the use of these coating materials for producing single-laver and multi-layer clearcoats and color- or effect-producing multi-laver coatings or as adhesives and sealing materials.

Accordingly there is still a need in the art for a removable coating, especially for greenhouses, having improved characteristics, such as resistance to rain, UV-light, atmospheric conditions in general, and allowing a single application or a reduced number of applications of the coating by annual season while maintaining the same level of protection against ultra-violet light. There is also a need in the art for a protective coating, especially for greenhouses, that can easily be removed without causing health problems to the required manpower and/or without causing environmental problems due to its composition. For instance there is a need in the art for an improved removing or cleaning agent that does not comprise a strong base and/or a complex former.

### Summary of the invention

According to a first aspect, the present invention relates to a coating formulation (such as a coating solution, suspension, slurry or powder) and to a removable coating obtainable therefrom, especially for the transparent part of buildings (e.g. parts made from glass or a transparent plastic surface) or structures such as greenhouses. According to the invention, the coating formulation and the removable coating obtainable therefrom comprises one or more light filtering components (such as pigments or colorants) and a binder system having an average acid value from 1 to 39 and comprising at least two different acrylic-based water-borne resins with significantly different acid value and/or water-solubility characteristics. Preferably, said binder system may comprise a first acrylic-based water-borne resin (a) having an acid value not above 35 and being preferably water-insoluble at a pH above 8 and a second acrylic-based water-borne resin (b) having an acid value from 40 to 250, for example from 40 to 200, from 40 to 150 or from 40 to 130. (b) is preferably water soluble at a pH above 8. The terms "*water insoluble"* is used here in relation to resin (a) to indicate that when the polymer is placed in water it appears, on visual inspection, not to dissolve. Preferably, the terms "*water insoluble"* should be construed as meaning that less than 0.05g of material can dissolve in 100 ml water and form a clear solution. The terms "*water soluble"* is used here in relation to resin (b) to indicate that when the polymer is placed in water it appears, on visual inspection, to dissolve. Whether the solution is a true isotropic solution or has some colloidal character is not important. Preferably, the terms "*water soluble"* should be construed as meaning that at least 0.05g, preferably 0.1g of material can dissolve in 100 ml water and form a clear solution. In an embodiment, the binder system for use in a removable coating or a coating formulation has an average acid value from 1 to 39 and comprises :
(a) a first water-resistant acrylic-based water-borne resin having an acid value not above 35, and
(b) a second acrylic-based water-borne resin being water-soluble at a pH above 8.

Within the invention, the protective coating can be removed without the need for an environmentally risky strong base or the need for a (usually expensive) complex former. For ease of application and environmental reasons, both resins (a) and (b) are water-borne, i.e. in the form of an acrylic-based resin suspension or emulsion in an aqueous medium such as water, at the time of applying the coating formulation, i.e. at the time of applying the removable coating. By using acrylic-based resin aqueous suspensions or emulsions with high solids contents, e.g. solids contents above 40% by weight, drying time is reduced and application is thus facilitated. In some circumstances, it is also admissible to provide a water-dispersible acrylic-based powder resin and to disperse it in a suitable amount of water just before preparation of the coating formulation, i.e. just before preparation of the removable coating. According to a specific embodiment of the present invention, the binder system may comprise a first acrylic-based water-borne resin (a) being water-insoluble at a pH above 8 and/or a second acrylic-based water-borne resin (b) having an acid value from 40 to 250, for example from 40 to 200, from 40 to 150 or from 40 to 130.

In a particular embodiment of the present invention, said binder system comprises:
(a) a first water-resistant acrylic-based water-borne resin having an acid value not above 35 and being water-insoluble at a pH above 8, and
(b) a second acrylic-based water-borne resin being water-soluble at a pH above 8 and having an acid value from 40 to 250, for example from 40 to 200, from 40 to 150 or from 40 to 130.

In an embodiment of the first aspect, the present invention relates to a coating formulation or removable coating, comprising one or more light filtering components and a binder system having an average acid value from 1 to 39, wherein said binder system comprises:
(a) a first water-resistant acrylic-based water-borne resin having an acid value not above 35, and
(b) a second acrylic-based water-borne resin being water-soluble at a pH above 8.

As an additional feature, said first water-resistant acrylic-based water-borne resin may be water-insoluble at a pH above 8 and/or the light filtering components may be pigments or colorants.

As an additional feature, said second acrylic-based water-borne resin (b) may have an acid value from 40 to 250.

As an additional feature, said first resin (a) and/or said second resin (b) may be a polymer or copolymer having one or more monomers independently selected from (e.g. having at least one monomer selected from) the group consisting of methyl (meth)acryalte, butyl (meth)acrylate, 2-ethylhexyl meth(acrylate), ethyl meth(acrylate), styrene, acrylonitrile, (meth)acrylamide, vinyl acetate, vinyl chloride and (meth)acrylic acid or alkali salts thereof.

As an additional feature, said coating may be removable with a cleaning agent comprising a weak base (the presence of a strong base is not necessary).

In any embodiments of the first aspect, the coating formulation or coating may optionally be free of adhesion promoter.

As an additional feature, said coating formulation or coating may further comprising a volatile base selected from the group consisting of ammonia, mono-, di- and tri-C₁₋₄ alkylamines. In embodiments, the one, two or three C₁₋₄ alkyl groups may be independently selected from methyl, ethyl, propyl (e.g. n-propyl or isopropyl), and butyl (e.g. n-butyl, sec-butyl, iso-butyl or tert-butyl). The use of a volatile base is advantageous as it evaporates during the drying on the coating.

As an additional feature, said one or more light filtering components may be selected from the group consisting of pigments and colorants.

In embodiments of the present invention, a coating formulation or coating according to any embodiments of the first aspect of the present invention may be applied to a transparent substrate.

The binder as defined in any embodiment of the first aspect of the present invention is also an aspect of the present invention. In an embodiment of this aspect, the present invention relates to a binder system for use in a coating formulation or removable coating, said binder system comprising:
(a) a first water-resistant acrylic-based water-borne resin having an acid value of at most 35, and
(b) a second acrylic-based water-borne resin being water-soluble at a pH above 8.

According to a second aspect, the present invention relates to a cleaning agent for removing a removable coating according to the first aspect defined herein-above, said cleaning agent comprising a weak base and being preferably free from a complex former (complexing agent). Optionally the cleaning agent according to embodiment of the present invention may further comprise a wetting agent, and/or a water-soluble thickening agent, and/or a strong base. The terms "*water soluble"* is used here in relation to the thickening agent to indicate that when the thickening agent is placed in water it appears, on visual inspection, to dissolve. Whether the solution is a true isotropic solution or has some colloidal character is not important. Preferably, the terms "*water soluble"* as used here in relation with the thickening agent should be construed as meaning that at least 0.05g of material, preferably 0.1g of material can be dissolved in 100 ml water and form a clear solution. According to yet another aspect, the present invention relates to a process for moderating the effects of ultraviolet light (e.g. from the sun) irradiation inside a building or structure (such as a greenhouse), said process comprising a step of applying a coating formulation, i.e. applying a removable coating according to the first aspect of the invention onto an external (or internal) ultraviolet light transparent surface of said building or structure, e.g. said greenhouse. The said transparent surface may be made of mineral glass or organic glass such as for instance a transparent rigid and shock-resistant organic polymers (e.g. polycarbonate or acrylic (Polymethyl methacrylate (PMMA))). Although its transparency level and mechanical properties may be lower, the greenhouse surface may also be made of a polyethylene foil.

In an embodiment of the second aspect, the present invention relates to a cleaning agent for removing a coating according to any embodiments of the first aspect of the present invention, comprising a weak base.

As an additional feature of this second aspect, said weak base may exhibit an acid dissociation constant value of the corresponding conjugated acid smaller than 13.

In any embodiments of the second aspect of the present invention, the cleaning agent may be free of a complex former (complexing agent).

As an additional feature, the cleaning agent may further comprise a strong base i.e. having a pKa of at least 13.

As an additional feature, said cleaning agent may be in the form of an aqueous solution have a pH between 8 and 11.

In any embodiments of the second aspect of the present invention, the cleaning agent may be free of organic solvents.

In a further aspect, the present invention relates to a process for moderating ultra-violet irradiation inside a building having an ultraviolet-light transparent surface, said process comprising a step of applying a coating formulation or coating according to any embodiment of the first aspect onto said ultraviolet-light transparent surface.

In yet a further aspect, the present invention relates to a method for applying a coating formulation or coating, wherein a coating formulation or coating according to any embodiment of the first aspect is applied to a substantially ultraviolet-light transparent surface, and wherein said coating formulation forms an ultra-violet light protective layer after drying.

In still a further aspect, the present invention relates to a kit comprising a coating formulation according to any embodiment of the first aspect of the present invention and a cleaning agent according to any embodiments of the second aspect of the present invention.

The cleaning agent can comprise a weak base.

In still a further aspect, the present invention relates to a greenhouse (or to any other UV-transparent surface) provided with a coating according to any embodiments of the first aspect of the present invention on its outer (or inner) surface.

Another aspect of the present invention relates to the use of a weak base for removing a removable protective coating for ultraviolet-light transparent parts of structures or buildings such as greenhouses.

### Detailed description of the invention

The present invention will be described with respect to particular embodiments but the invention is not limited thereto but only by the claims. Where the term " comprising " is used in the present description and claims, it does not exclude the presence of other elements or steps. Where an indefinite or definite article is used when referring to a singular noun e.g. " a " or " an ", " the ", this includes a plural of that noun unless something else is specifically stated.

The term " comprising ", used in the claims, should not be interpreted as being restricted to the means listed thereafter; it does not exclude other elements or steps. Thus, the scope of an expression such as " a device comprising means A and B " should not be limited to devices consisting only of components A and B. It means that with respect to the present invention, the only functionally relevant components of the device are A and B.

Furthermore, the terms first, second and third in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

As used herein and unless provided otherwise, the terms "*ultraviolet-light transparent*" means transparent to at least part of the UV spectrum. More in particular, it means transparent to at least part of solar UV, i.e. to at least part of UVA.

As used herein and unless provided otherwise, the terms "*water-resistant*" means "which does not degrade in contact with water having a pH of 7 or under".

As used herein and unless provided otherwise, the terms "alkali salt" is construed as being synonym of "alkaline salt" and refers to salts of Na, K, Li, Rb, or Cs as well as to alkaline earth salts such as salts of Be, Mg, Ca, Sr or Ba.

According to a first aspect, the present invention provides a coating formulation and a removable coating obtainable therefrom. The removable coating may be a removable coating for buildings or structures having transparent parts, e.g. mineral glass or organic polymers (e.g. polycarbonate or acrylic or polyethylene) windows such as greenhouses. The coating formulation or removable coating according to this aspect of the invention can be applied to an ultraviolet light (e.g. solar UV) transparent surface of such buildings or structures having transparent parts, e.g. a greenhouse. This may occur at the beginning of the sunny season and the coating preferably provides a shading effect, i.e. it moderates the intensity of the visible light and moderates the intensity of the ultraviolet light (e.g. sun) radiation that enters the building or structure such as a greenhouse.

Surprisingly, it has been found that the coating according to this aspect of the present invention shows good adhesive property to both polymer and glass surface as well as strong resistance to atmospheric conditions, e.g. rain and/or wind, for a long period of time, e.g. during the whole sunny season, while still being removable in an efficient way using a weak base solution and without the need for the environmentally hazardous complex forming agent (i.e. complexing agent) required according to the prior art.

The kind of light reflecting and/or filtering component(s) or colorant(s) or pigment(s) that can be used in a coating formulation or coating according to this aspect of the invention is not a limiting feature of the present invention. Any light filtering component or pigment or colorant or combination of pigments, light filtering components or colorants known in the art, which can be suitably dispersed into the binder system and provide the desired protective action and/or covering power, can be used. The skilled person will be able to adapt the type and quantity of the light filtering component(s) or colorant(s) (e.g. pigment(s) or dye(s)) to be used according to the properties that are desired for the protective coating. Pigments are usually preferred as their life-time under solar radiation is longer than for dyes. For example the colorant (e.g. pigment) may be present in an amount ranging from 30 to 95% by weight, preferably 40 to 85% by weight, of the removable coating formulation. On a dry weight basis, the colorant (e.g. pigment(s)) may be present for instance in an amount ranging from 65% to 95%, preferably from 70% to 90%, more preferably from 75% to 90%. Suitable pigments include for example, calcium carbonate, titanium oxide, aluminium silicate, magnesium silicate, gypsum, baryte, and combinations thereof.

The binder system to be used according to the first aspect of the present invention is an important parameter of the invention. It is preferably present in an amount ranging from 5 to 60% by weight of the removable coating formulation. On a dry weight basis, the binder is preferably present in an amount ranging from 5 to 60%, preferably from 5 to 40% by weight, more preferably from 10 to 30% by weight, even more preferably form 10 to 25% by weight and most preferably from 11 % by weight to 22% by weight. The binder system according to this aspect of the present invention comprises a mixture of two or more different acrylic-based resins, and by suitably balancing the respective proportions of these two or more resins in the binder system while maintaining an average acid value from 15 to 39 surprisingly provides a desirable compromise between water-resistance of the removable coating during protective use, and ease of removal of the coating after protective use, especially the ability to remove the protective coating without the need for an environmentally risky strong base or the need for a complex former, e.g. by using the removing solution, according to embodiments of the present invention.

According to a specific embodiment of the present invention, the first acrylic-based resin (a) is preferably present in an amount ranging from 30 to 95% (e.g. 30 to 70% or 40 to 60%) by weight, preferably 50 to 90%, more preferably 55 to 90%, most preferably from 57 to 88% of said binder system and the second acrylic-based resin (b) is preferably present in an amount ranging from 70 to 5% (e.g. 70 to 30% or 60 to 40%), preferably 50 to 10%, more preferably 45 to 10%, most preferably 43 to 12% by weight of said binder system.

The type of acrylic-based resin to be used in the binder system of the present invention can be adapted over a broad range of commercially available or easily accessible products such as polymers and copolymers comprising one or more monomers such as methyl (meth)acrylate, butyl (meth)acrylate, 2-ethylhexyl meth(acrylate), ethyl meth(acrylate), styrene, α-methylstyrene, (meth)acrylonitrile, (meth)acrylamide, (meth)acrylic acid, vinyl acetate, vinyl chloride and alkaline salts thereof. The term " acrylic-based " as used herein refers to a resin wherein the acrylic or methacrylic monomer(s) are predominant by weight with respect to the whole resin composition but does not exclude the presence of minor amounts of non-acrylic comonomers (e.g. styrene) compatible therewith.

According to another specific embodiment of the present invention, the second acrylic-based resin (b) may comprise :
- from 40 to 70 wt-% of methyl methacrylate,
- from 20 to 40 wt-%, of butyl acrylate, and
- from 7 to 20 wt-%, of (meth)acrylic acid.

Some acrylic-based resins suitable for use as the second (preferably higher acid value) acrylic-based resin (b) of the coating formulation or coating according to the first aspect of this invention are commercially available, such as for example, resins available under the trade names NeoCryl® B817 and NeoCryl® BT26 (both from DSM Resins, Waalwijk, The Netherlands) and Craymul 2701 (from Cray Valley SA, France).

According to another specific embodiment of the present invention, the first acrylic-based resin (a) may comprise :
- from 10 to 80 wt-% of methyl methacrylate and/or methyl acrylate,
- from 0 to 25 wt-% of styrene,
- from 0 to 60 wt-% of butyl acrylate, and
- less than 7 wt-%, e.g. from 0 to 5 wt-% of (meth)acrylic acid.

Some acrylic-based resins suitable for use as the first (preferably lower acid value) acrylic-based resin (a) of the coating formulation or coating according to the first aspect of this invention are commercially available, such as for example, a resin available under the trade name NeoCryl® FL711 (from DSM Resins, Waalwijk, The Netherlands) or can be manufactured using methods well known in the art.

The coating formulation or removable coating of the present invention are easily produced by simply mixing, in one or more steps, its essential components, i.e. the first (preferably lower acid value) acrylic-based water-borne resin (a), the second (preferably higher acid value) acrylic-based water-borne resin (b), and the one or more light filtering agents in suitable proportions until a homogeneous mixture including a binder system with the desired average acid value is obtained.

According to a specific embodiment the protective coating of this invention is easily removable with a cleaning agent comprising a weak base and/or being free of any complexing agent.

In addition to the light filtering component(s), colorant(s) or pigment(s) and the binder system herein above described, the coating liquid or removable coating according to this aspect of the invention can optionally further comprise additives known in the art, such as one or more biocides, wetting agents, defoamers, thickeners and light stabilizers.

According to a specific embodiment, the coating liquid or removable coating of this invention is free of any adhesion promoter (i.e. adhesion promoting additives) such as a silane.

According to a specific embodiment, the coating formulation of this invention can be manufactured in a ready-to-apply form, e.g. further comprising water and a volatile base, and can optionally be diluted at will in order to realise the desired shading of the coating. The coating formulation according to embodiments of the present invention can also be in the form of a high solid content formulation requiring further dilution before application. In coating formulation according to embodiments of the present invention, the volatile base may be selected from the group consisting of ammonia, mono-, di- and tri-C₁₋₄ alkylamines, and mixtures thereof. In embodiments, the one, two or three C₁₋₄ alkyl groups of the alkylamine may be independently selected from methyl, ethyl, propyl (e.g. n-propy or isopropyl), and butyl (e.g. n-butyl, sec-butyl, iso-butyl or tert-butyl).

In principle, but without being bound by any theory, the presence of the volatile base is useful in making the binder system soluble, dispersible (leading to a stable dispersion) or suspendible (leading to a stable suspension) in water, therefore allowing an easy application of the coating, e.g. on the surface of glass e.g. in a greenhouse, preferably by spraying the solution, using for example a paint spray gun, or a garden sprayer. After 30 minutes, or a few hours, the volatile base spontaneously evaporates into the atmosphere, and the binder system solidifies, thus providing a protective coating with adequate adhesive strength and resistance to atmospheric conditions, e.g. rain and/or wind, especially on a glass surface.

According to a second aspect, the present invention provides a cleaning agent which is able to remove the protective coating of the first aspect of the invention. This cleaning agent comprises a weak base, and optionally a wetting agent and/or a water-soluble thickening agent.

In a third aspect, the present invention relates to the use of a cleaning agent according to any embodiments of the second aspect of the present invention for removing a removable coating according to any embodiments of the first aspect of the present invention. In other words, in embodiments of the third aspect, this invention provides the use of a weak base for removing the removable coating herein-above defined within a first aspect. The weak base suitable for the cleaning agent according to this aspect of the invention is preferably soluble in water. As used in relation with the weak base, the terms "*soluble in water*" mean that when the weak base is placed in water it appears, on visual inspection, to dissolve and to form a clear solution. Preferably, the terms "soluble in *water*" as used in relation to a weak base should be construed as meaning that at least 0.05g of material, preferably 0.1g of material, can be dissolved in water and form a clear solution.

According to a specific embodiment of the invention, the weak base preferably exhibits an acid dissociation constant (pKa) value of the corresponding conjugated acid smaller than 13, such as sodium carbonate, potassium carbonate and ammonium carbonate. Preferably, the pKa of the conjugated acid of the weak base in at least 10.

According to another specific embodiment, the cleaning agent of this invention is free of any complex forming (or complexing) agent. According to embodiments, the cleaning agent may optionally further comprise a strong base. Such a strong base should be compatible with the weak base under the conditions of use, i.e. in the presence of the coating to be removed. Exemplary strong bases include, alkaline hydroxides such as potassium hydroxide or sodium hydroxide.

The cleaning agent according to the second aspect of the present invention can take the form of (i) a dry composition (i.e. comprising no or a small amount of water such as e.g. 10% or less, 5% or less or 1% or less), of (ii) a concentrated aqueous solution to be diluted before use (e.g. to obtain a diluted solution having a pH preferably between 8 and 11 or more preferably between 9 and 10), or of (iii) a diluted, ready to use aqueous solution (e.g. having a pH preferably between 8 and 11 or more preferably between 9 and 10). Diluted ready to use solutions can of course be further diluted (e.g. as long as the pH of the further diluted solution remains at or above 8). This is for instance the case with ready to use formulations 4-8 of table 3 which can be further diluted up to a factor 10, preferably up to a factor 7, e.g. by a factor 3 to 7 or by a factor 5 to 7 before use. Although they are usable undiluted, a dilution improves the fluidity and applicability of those formulations.

According to a specific embodiment, the cleaning agent of this invention is in the form of an aqueous solution having a pH preferably between 8 and 11, more preferably between 9 and 10. To this effect, the cleaning agent, in a ready use form, preferably has a pH of from 8 to 11, preferably 9 to 10. Of course cleaning formulation having a higher pH remains within the scope of the present invention as a simple dilution would bring them in the preferred pH range. As understood by the person skilled in the art, the exact nature of the weak base, its molecular mass, its strength (i.e. the pKa of its conjugated acid) combined with the pH to be obtained in the cleaning agent's solution, are determining factors for the amount of the weak base to be used. For example an amount varying from 0.3 to 7%, preferably 0.5 to 5% by weight of the cleaning agent, is suitable for a weak base such as sodium carbonate (having a molecular mass 106 g/mole, and a pKa of the conjugated acid of 10.3). In its dry form, the cleaning agent of the present invention can for instance comprise between 10 and 85%wt of weak base.

The kind and amount of water-soluble or hydrophylic thickener to be used according to this second aspect of the invention are not limiting features and a large variety of water-soluble thickener known in the art and providing the suitable effect, i.e. increasing the viscosity of the cleaning agent therefore preventing it from flowing off the treated surface too rapidly, can be used, such as for example: polyvinyl alcohol, hydroxyethyl cellulose, crosslinked acrylic copolymers and mixtures thereof. The amount of water-soluble thickener usually ranges from 0 to 5% by weight of the ready to use cleaning agent according to embodiments of the present invention but it can be up to 12%wt in the case of crosslinked acrylic copolymer. In its dry form (calculated for 0% of water), the cleaning agent of the present invention can for instance comprise between 12 and 80%wt of thickener.

The kind and amount of wetting agent to be used according to this second aspect of the invention are not limiting features and a large variety of wetting agents known in the art and providing the suitable effect, i.e. facilitating the impregnation of the coating, can be used according to this invention, such as for example, sodium lauryl sulfate, or similar product. Some suitable wetting agent are commercially available, such as for example Empicol® 0045 (Huntsman, Holland), Disponil® SDS G (Cognis, Germany). The wetting agent can for instance be used between 0 and 0.75% by weight of the ready to use cleaning agent. In its dry form (calculated for 0% of water), the cleaning agent of the present invention can for instance comprise between 0 and 15%wt of wetting agent.

In a preferred embodiment, the cleaning agent comprises (in its ready to use form):
- from 80 to 88%wt of water,
- from 8 to 12%wt of thickener comprising at least a crosslinked acrylic copolymer thickener (such as e.g. Primal ASE60),
- from 0 to 0.5%wt of wetting agent (such as e.g. Empicol® 0045), and
- from 3 to 7%wt of a weak carbonate base such as e.g. sodium carbonate.

The cleaning agent of this last preferred embodiment can still be diluted up to 7 times or even 10, times, e.g. between 5 to 7 times before use. This last dilution can for instance be performed directly before use. Examples of cleaning agents according to this preferred embodiment are shown in column 7-8 of table 3.

In another preferred embodiment, the cleaning agent comprises (in its dry form (calculated for 0% of water)):
- from 60 to 70%wt of thickener comprising at least a crosslinked acrylic copolymer thickener (such as e.g. Primal ASE60),
- from 1 to 2%wt of wetting agent (such as e.g. Empicol® 0045), and
- from 25 to 40%wt, preferably from 30 to 35%wt of a weak carbonate base such as sodium carbonate.

Examples of cleaning agents according to this preferred embodiment are shown in column 7-8 of table 4.

According to a specific embodiment, the cleaning agent of this invention may preferably be free of any organic solvent. For instance it may comprise from 0 to 2%wt of organic solvent, preferably 0 to 1%wt, most preferably from 0 to 0.1%wt or organic solvent.

To remove the removable coating according to the first aspect the cleaning agent according to the second aspect of the invention is suitably applied, for example by pouring or by spraying (e.g. with a garden sprayer or a paint spray gun) in order to impregnate the coating, preferably in a humid atmosphere. The contact time before washing can be varied over a broad range, e.g. between 30 minutes and 24 hours, after which the surface (e.g. greenhouse) is washed with water either by spraying or pouring water, or even by (natural) rain. Since the cleaning agent according to the second aspect of the invention usually has low volatility, it may still be effective after 24 hours in the presence of water, e.g. rain.

According to a specific embodiment, the cleaning agent is provided in a concentrated form suitable for dilution (e.g. 5 to 10 times) before, preferably just before, use, i.e. before removal of the coating.

According to another aspect of the present invention, the coating extensively described in the first aspect herein-above may also be removed, when applied to a rigid and scratch-resistant surface such as a glass greenhouse, by mechanical means such as a rotating brush of an automatic or semi-automatic brushing or cleaning system operated in the presence of water. Suitable examples of such systems include, the Roofmaster roofcleaners commercially available from Besseling & All Techniek, Heerhugowaard, The Netherlands.

According to another aspect, the present invention provides a process for moderating the sun irradiation inside a building or structure having transparent parts such as a greenhouse, comprising the step of applying a coating according to the first aspect of the invention onto a substantially transparent surface, preferably the outer wall surface, of the building or structure, e.g. a greenhouse. According to yet another aspect, the present invention provides a method for applying a coating, wherein a coating according to the above specifications is applied to a substantially transparent surface, which said coating forms an ultra-violet light protective layer after drying. Although the drying time of said coating may depend upon parameters such as the solids contents of the resins present in the coating, the amount of coating applied per surface unit of the substantially transparent surface, the temperature of application and the like, one advantage of the coating of this invention is a short drying time, e.g. not more than 60 minutes at a temperature ranging from 20 to 25°C, and no more than 20 minutes at higher temperatures. According to this invention, the substantially transparent surface may be an outer wall surface of a greenhouse. The greenhouse may be made of glass, organic glass (i.e. organic glass-like polymers) such as acrylic or polycarbonate, or polyethylene. In order to sustain the ultra-violet irradiation regime of certain sunny climates, linear low density polyethylene (LLDPE) and low density polyethylene (LDPE) films may contain a high molecular weight hindered amine light stabiliser (HALS) only, or optionally along with a primary antioxidant (i.e. Irganox® 1010) and a secondary antioxidant (i.e. Irgafos® 168 or Alkanox® TNPP), and/or an ultra-violet additive (i.e. Chimassorb® 81 or Tinuvin® P or Tinuvin® 326).

According to yet another aspect, the present invention provides a kit comprising a coating formulation and a cleaning agent, both being as specified herein-above in any of the first and second embodiment of the present invention respectively.

The invention will be further described through non-limiting examples of coating composition and cleaning agent compositions.

Ingredients used in the Examples:
Neocryl® B817 refers to a commercially available (from DSM Neo Resins, The Netherlands) resin having an acid value of 60, having a solid content of 100% by weight and having a monomeric composition of 60 weight-% of methyl methacrylate, 30 weight-% of butyl acrylate and 10 weight-% of acrylic acid.
Acticide® MBF50 refers to a commercially available biocide from THOR.
BYK024 refers to a commercially available de-foamer from BYK Chemie.
BYK154 refers to a commercially available wetting agent from BYK Chemie.
CaCO₃ refers to commercially available (from Omya) calcium carbonate used as filler and pigment.
Deuteron XG is a commercially available thickener from Deuteron.
Neocryl® FL711 refers to a commercially available (from DSM Neo Resins, The Netherlands) resin having an acid value of 25, having a solid content of 20% by weight and having a monomeric composition of 15 weight-% of methyl methacrylate, 15 weight-% of styrene, 65 weight-% of methyl acrylate and 5 weight-% of (meth)acrylic acid.
Craymul® 2701 refers to a commercially available (from Cray Valley, France) resin having an acid value of 130.
2AQ076 is a copolymer resin having an acid value of less than 10, having a solid content of 50% by weight and having a monomer composition of 50-55 weight-% of methyl methacrylate, 40-45 weight-% of butyl acrylate and 1.50 weight-% methacrylic acid.
Polyvinyl alcohol refers to a commercially available polyvinyl alcohol of grade BP-20 from Omya Peralta GmbH.
Hydroxyethylcellulose refers to a commercially available hydroxyethylcellulose (Tylose® H30000YP2) from SE Tylose® GmbH.
Empicol® 0045 refers to a wetting agent (lauryl soduim sulfate) commercially available from Huntsman.
Sodium carbonate refers to commercially available sodium carbonate from Solvay, Brunner Mond.
Potassium carbonate refers to commercially available potassium carbonate from Société des Produits Chimiques d'Harbonnières.
Ammonium carbonate refers to commercially available ammonium carbonate from B.A.S.F (Ludwigshafen, Germany).
Primal ASE60 refers to a commercially available crosslinked acrylic copolymer thickener from Rohm and Haas.

### Example 1 - Preparation of the removable coating in a higher solid content.

In a reaction vessel the following formulations (see table 1) were made by adding and mixing the ingredients in the following proportions by weight.

**Table 1**

| Ingredients | Formulation 1 | Formulation 2 | Formulation 3 | Formulation 4 |
|---|---|---|---|---|
| Water | 53.29 | 110.4 | 96.06 | 110.4 |
| Ammonia | 3.81 | 6.5 | 5.7 | 6.5 |
| Neocryl® B817 | 19.03 | 39 | 34 | 0 |
| Craymul® 2701 | 0 | 0 | 0 | 36.0 |
| Water | 49.17 | 142.85 | 124.8 | 103.8 |
| Acticide® MBF50 | 4.76 | 3.9 | 2.3 | 3.9 |
| BYK024 | 1.59 | 2.6 | 2.3 | 2.6 |
| BYK154 | 1.59 | 1.3 | 1.1 | 1.3 |
| CaCO₃ | 634.41 | 519.5 | 582 | 519.5 |
| Water | 88.27 | 120.2 | 104.9 | 120.2 |
| Deuteron XG | 1.34 | 1.83 | 1.6 | 1.83 |
| Neocryl® FL711 | 142.74 | 0 | 0 | 0 |
| 2AQ076 | 0 | 51.95 | 45.2 | 94 |

### Example 2 - application of the coatings.

The compositions of example 1 were diluted with water in a ratio from 1/2 to 1/5, in order to provide different shading effects. The resulting aqueous solutions were applied by spraying with a garden sprayer. Applications were performed on a glass plate at an angle of 45°. After 30 minutes at room temperature (20-25°C), the coatings became rain-resistant.

The dry film thickness and corresponding shading effect (light attenuation) obtained for the formulations of table 1 are represented in table 2. All formulations gave similar film thickness and light attenuation.

**Table 2**

| Dilution Ratio (coating/water) | Dry film thickness (µm) | Light attenuation |
|---|---|---|
| 1/2 | 7-9 | 35-40 % |
| 1/3 | 4 | 25-30 % |
| 1/4 | 3-4 | 20-25 % |
| 1/5 | 2 | 15-20 % |

The dry film thickness was measured with a thickness gauge (e.g. according to ASTM 4138).

The Light attenuation value indicated in table 2 was calculated by the ratio daylight exposure / light attenuation measured through the coated panel. The measurements were realised with a Lux-meter, type " Testo 545 ".

The coatings were considered as rain resistant when spraying water on the coating with a garden sprayer for 30 seconds does not affect the coating and is remain undamaged.

### Example 3 - preparation of the cleaning agent.

In a reaction vessel, formulations (see table 3) were made by adding and mixing the ingredients in the following proportions by weight.

**Table 3**

| Formulation | 1 | 2 | 3 | 4 | 5 | 6 | 7 | 8 |
|---|---|---|---|---|---|---|---|---|
| Water | 59.5 | 59.5 | 59.5 | 94 | 83.5 | 83 | 59.6 | 60.1 |
| Primal ASE60 | - | - | - | - | - | - | 10 | 10 |
| Polyvinyl alcohol | 3 | 3 | 3 | - | - | - | - | - |
| Hydroxy-ethylcellulose | - | - | - | 1 | 1 | 1.5 | 0.5 | - |
| Water | 27 | 27 | 27 | - | - | - | 4.65 | 4.65 |
| Empicol® 0045 | 0.5 | 0.5 | 0.5 | - | 0.5 | 0.5 | 0.25 | 0.25 |
| Water | 9.5 | 9.5 | 9.5 | - | 10 | 10 | 20 | 20 |
| Sodium carbonate | 0.5 | - | - | 5 | 5 | 5 | 5 | 5 |
| Potassium Carbonate | - | 0.5 | - | - | - | - | - | - |
| Ammonium Carbonate | - | - | 0.5 | - | - | - | - | - |
| Total | 100 | 100 | 100 | 100 | 100 | 100 | 100 | 100 |

The cleaning agents of table 3 comprising 5 %wt of sodium carbonate can be diluted up to 7 times or event 10 times before use, preferably 3 to 7 times, most preferably 5 to 7 times before use.
Table 4 shows the same formulations as presented in table 3 but on a dry weight basis (calculated without taking water into consideration).

**Table 4**

| Formulation | 1 | 2 | 3 | 4 | 5 | 6 | 7 | 8 |
|---|---|---|---|---|---|---|---|---|
| Primal ASE60 | - | - | - | - | - | - | 63.5 | 65.6 |
| Polyvinyl alcohol | 75 | 75 | 75 | - | - | - | - | - |
| Hydroxy-ethylcellulose | - | - | - | 16.7 | 15.3 | 21.4 | 3.2 | - |
| Empicol® 0045 | 12.5 | 12.5 | 12.5 | - | 7.7 | 7.2 | 1.6 | 1.6 |
| Sodium carbonate | 12.5 | - | - | 33.3 | 77 | 71.4 | 31.7 | 32.8 |
| Potassium Carbonate | - | 12.5 | - | - | - | - | - | - |
| Ammonium Carbonate | - | - | 12.5 | - | - | - | - | - |
| Total | 100 | 100 | 100 | 100 | 100 | 100 | 100 | 100 |

### Example 4 - Removal of the coatings

In order to reproduce the natural conditions, the coatings of example 2 were subjected to an accelerated ageing by storing them in an oven at 70°C for one or two weeks. Tests on naturally aged panels were also realised.

The panels thus prepared where washed according to one of the two following procedures.

Procedure 1: the cleaning solutions were sprayed onto the panels using a garden sprayer, in order to impregnate the coatings. After 30 minutes, the panels were washed by spraying water.

Procedure 2: the cleaning solutions were sprayed onto the panels using a garden sprayer, in order to impregnate the coatings. After 24 hours the panels were exposed to natural rain.

After these washing procedures, the coatings were totally removed. In some cases, a slight haze was present directly after cleaning, but was easily removed by rain in the few days after cleaning.

## Claims

1. A binder system for use in a removable coating or a coating formulation, said binder system having an average acid value from 1 to 39 and comprising:
(a) a first water-resistant acrylic-based water-borne resin having an acid value not above 35, and
(b) a second acrylic-based water-borne resin being water-soluble at a pH above 8.

2. A removable coating or a coating formulation, comprising one or more light filtering components and a binder system according to claim 1.

3. The removable coating or a coating formulation according to claim 2, wherein said first water-resistant acrylic-based water-borne resin is water-insoluble at a pH above 8 and/or the light reflecting and/or filtering components are pigments or colorants.

4. The removable coating or a coating formulation according to claim 2 or claim 3, wherein said second acrylic-based water-borne resin (b) has an acid value from 40 to 250.

5. The removable coating or a coating formulation according to any of claims 2 to 4, wherein said first resin (a) is present in an amount ranging from 30 to 95% by weight of said binder system and said second resin (b) is present in an amount ranging from 70 to 5% by weight of said binder system.

6. The removable coating or a coating formulation according to any of claims 2 to 5, wherein said first resin (a) and/or said second resin (b) is a polymer or copolymer having at least one monomer selected from the group consisting of methyl (meth)acryalte, butyl (meth)acrylate, 2-ethylhexyl meth(acrylate), ethyl meth(acrylate), styrene, acrylonitrile, (meth)acrylamide, vinyl acetate, vinyl chloride and (meth)acrylic acid or alkaline salts thereof.

7. A cleaning agent for removing a coating according to any of claims 2 to 6, comprising on a dry weight basis:
- from 60 to 70%wt of thickener comprising at least a crosslinked acrylic copolymer thickener,
- from 1 to 2%wt of wetting agent, and
- from 25 to 40%wt of a weak carbonate base.

8. The cleaning agent according to claim 7, being free of a complexing agent.

9. The cleaning agent according to claim 7 or claim 8, wherein, said cleaning agent is in the form of an aqueous solution having a pH between 8 and 11.

10. The cleaning agent according to any of claims 7 to 9, being free of organic solvents.

11. A process for moderating ultra-violet irradiation inside a building having an ultraviolet-light transparent surface, said process comprising a step of applying a coating formulation according to any of claims 2 to 6 onto said ultraviolet-light transparent surface.

12. A kit comprising a coating formulation according to any of claims 2 to 6 and a cleaning agent comprising a weak base.

13. The kit according to claim 12 wherein said weak base has an acid dissociation constant value of the corresponding conjugated acid smaller than 13.

14. The kit according to claim 12 or claim 13 wherein said cleaning agent is according to any of claims 7 to 10.

15. A transparent substrate having a coating according to any of claims 2 to 6 on its outer surface.

16. Use of a weak base for removing a removable protective coating according to any one of claims 2 to 6, wherein said removable protective coating is for ultraviolet-light transparent parts of structures or buildings.

## Patentansprüche

1. Bindemittelsystem zur Verwendung in einer entfernbaren Beschichtung oder einer Beschichtungsformulierung, wobei das Bindemittelsystem einen durchschnittlichen Säurewert von 1 bis 39 aufweist und Folgendes umfasst:
a) ein erstes, wasserbeständiges wässeriges Harz auf Acrylbasis mit einem Säurewert nicht über 35, und
b) ein zweites wässeriges Harz auf Acrylbasis, das bei einem pH über 8 wasserlöslich ist.

2. Entfernbare Beschichtung oder Beschichtungsformulierung, umfassend ein oder mehrere Lichtfilterkomponenten und ein Bindemittelsystem nach Anspruch 1.

3. Entfernbare Beschichtung oder Beschichtungsformulierung nach Anspruch 2, wobei das erste, wasserbeständige wässerige Harz auf Acrylbasis bei einem pH über 8 wasserunlöslich ist und die Licht reflektierenden und/oder filternden Komponenten Pigmente oder Farbstoffe sind.

4. Entfernbare Beschichtung oder Beschichtungsformulierung nach Anspruch 2 oder Anspruch 3, wobei das zweite wässerige Harz auf Acrylbasis (b) einen Säurewert von 40 bis 250 aufweist.

5. Entfernbare Beschichtung oder Beschichtungsformulierung nach einem der Ansprüche 2 bis 4, wobei das erste Harz (a) in einer Menge im Bereich von 30 bis 95 Gewichtsprozent des Bindemittelsystems vorhanden ist und das zweite Harz (b) in einer Menge im Bereich von 70 bis 5 Gewichtsprozent des Bindemittelsystems vorhanden ist.

6. Entfernbare Beschichtung oder Beschichtungsformulierung nach einem der Ansprüche 2 bis 5, wobei das erste Harz (a) und/oder das zweite Harz (b) ein Polymer oder Copolymer ist, mit mindestens einem Monomer, das ausgewählt ist aus der Gruppe bestehend aus Methyl(meth)acrylat, Butyl(meth)acrylat, 2-Ethylhexyl(meth)acrylat, Ethyl(meth)acrylat, Styrol, Acrylnitril, (Meth)acrylamid, Vinylacetat, Vinylchlorid und (Meth)acrylsäure oder alkalischen Salzen davon.

7. Reinigungsmittel zum Entfernen einer Beschichtung nach einem der Ansprüche 2 bis 6, umfassend auf einer Trockengewichtsbasis:
- 60 bis 70 Gewichtsprozent eines Verdickungsmittels, umfassend mindestens ein vernetztes Acrylcopolymer-Verdickungsmittel,
- 1 bis 2 Gewichtsprozent eines Benetzungsmittels, und
- 25 bis 40 Gewichtsprozent einer schwachen Karbonatbase.

8. Reinigungsmittel nach Anspruch 7, das frei von einem Komplexbildner ist.

9. Reinigungsmittel nach Anspruch 7 oder Anspruch 8, wobei das Reinigungsmittel die Form einer wässerigen Lösung mit einem pH zwischen 8 und 11 aufweist.

10. Reinigungsmittel nach einem der Ansprüche 7 bis 9, das frei von organischen Lösemitteln ist.

11. Verfahren zum Mäßigen von Ultraviolettstrahlung im Inneren eines Gebäudes mit einer Ultraviolettlichttransparenten Oberfläche, wobei das Verfahren einen Schritt des Auftragens einer Beschichtungsformulierung nach einem der Ansprüche 2 bis 6 auf die Ultraviolettlicht-transparente Oberfläche umfasst.

12. Kit, umfassend eine Beschichtungsformulierung nach einem der Ansprüche 2 bis 6 und ein Reinigungsmittel, das eine schwache Basis umfasst.

13. Kit nach Anspruch 12, wobei die schwache Basis einen Säuredissoziationskonstantenwert der entsprechenden konjugierten Säure kleiner 13 aufweist.

14. Kit nach Anspruch 12 oder Anspruch 13, wobei das Reinigungsmittel nach einem der Ansprüche 7 bis 10 ist.

15. Transparente Oberfläche mit einer Beschichtung nach einem der Ansprüche 2 bis 6 an ihrer Außenfläche.

16. Verwendung einer schwachen Base zur Entfernung einer entfernbaren Schutzbeschichtung nach einem der Ansprüche 2 bis 6, wobei die entfernbare Schutzbeschichtung für Ultraviolettlicht-transparente Teile von Strukturen oder Gebäuden dient.

## Revendications

1. Système de liant pour utilisation dans un revêtement amovible ou une formulation de revêtement, ledit système de liant ayant une valeur acide moyenne de 1 à 39 et comprenant :
(a) une première résine aqueuse, à base acrylique, imperméable ayant une valeur acide non supérieure à 35, et
(b) une seconde résine aqueuse, à base acrylique, hydrosoluble à un pH supérieur à 8.

2. Revêtement amovible ou formulation de revêtement, comprenant un ou plusieurs composants de filtrage de lumière et un système de liant selon la revendication 1.

3. Revêtement amovible ou formulation de revêtement selon la revendication 2, dans lequel ladite première résine aqueuse, à base acrylique, imperméable est insoluble dans l'eau à un pH supérieur à 8 et/ou les composants de filtrage et/ou de réflexion de lumière sont des pigments ou des colorants.

4. Revêtement amovible ou formulation de revêtement selon la revendication 2 ou la revendication 3, dans lequel ladite seconde résine aqueuse à base acrylique (b) a une valeur acide de 40 à 250.

5. Revêtement amovible ou formulation de revêtement selon l'une quelconque des revendications 2 à 4, dans lequel ladite première résine (a) est présente en une quantité allant de 30 à 95 % en poids dudit système de liant et ladite seconde résine (b) est présente en une quantité allant de 70 à 5 % en poids dudit système de liant.

6. Revêtement amovible ou formulation de revêtement selon l'une quelconque des revendications 2 à 5, dans lequel ladite première résine (a) et/ou ladite seconde résine (b) est un polymère ou un copolymère ayant au moins un monomère sélectionné à partir du groupe constitué par du méthyle (méth)acrylate, du butyle (méth)acrylate, du 2-éthylhexyle méth(acrylate), de l'éthyle méth(acrylate), du styrène, de l'acrylonitrile, du (méth)acrylamide, de l'acétate de vinyle, du chlorure de vinyle et de l'acide (méth)acrylique ou des sels alcalins de ces derniers.

7. Agent de nettoyage pour enlever un revêtement selon l'une quelconque des revendications 2 à 6, comprenant sur une base de poids sec :
- de 60 à 70 % en poids d'épaississant comprenant au moins un épaississant de copolymère acrylique réticulé,
- de 1 à 2 % en poids d'agent mouillant, et
- de 25 à 40 % en poids d'une base de carbonate faible.

8. Agent de nettoyage selon la revendication 7, sans agent complexant.

9. Agent de nettoyage selon la revendication 7 ou la revendication 8, dans lequel ledit agent de nettoyage est sous la forme d'une solution aqueuse ayant un pH entre 8 et 11.

10. Agent de nettoyage selon l'une quelconque des revendications 7 à 9, sans solvants organiques.

11. Processus pour modérer un rayonnement ultraviolet à l'intérieur d'un bâtiment ayant une surface transparente à la lumière ultraviolette, ledit processus comprenant une étape d'application d'une formulation de revêtement selon l'une quelconque des revendications 2 à 6 sur ladite surface transparente à la lumière ultraviolette.

12. Ensemble comprenant une formulation de revêtement selon l'une quelconque des revendications 2 à 6 et un agent de nettoyage comprenant une base faible.

13. Ensemble selon la revendication 12, dans lequel ladite base faible a une valeur de constante de dissociation d'acide de l'acide conjugué correspondant plus petite que 13.

14. Ensemble selon la revendication 12 ou la revendication 13, dans lequel ledit agent de nettoyage est selon l'une quelconque des revendications 7 à 10.

15. Substrat transparent ayant un revêtement selon l'une quelconque des revendications 2 à 6 sur sa surface extérieure.

16. Utilisation d'une base faible pour enlever un revêtement protecteur amovible selon l'une quelconque des revendications 2 à 6, dans laquelle ledit revêtement protecteur amovible est pour des éléments de structures ou de bâtiments transparents à la lumière ultraviolette.
